# EUROPEAN PATENT SPECIFICATION

(11) **EP 3 433 077 B1**
(45) Date of publication and mention of the grant of the patent: **26.02.2020**
(21) Application number: 16759745.9
(22) Date of filing: 31.08.2016
(51) Int. Cl.: B29C 65/18, B65B 51/14, B65B 51/30

(54) **SEALING TOOL AND SEALED PACKAGE**
VERSIEGELUNGSWERKZEUG UND VERSIEGELTE VERPACKUNG
OUTIL DE SCELLAGE ET EMBALLAGE SCELLÉ

(43) Date of publication of application: 30.01.2019
(73) Proprietor: HP Indigo B.V., 1187 XR Amstelveen (NL)
(72) Inventor: TULCHINSKI, Dani, 76101 Ness Ziona (IL); STOLOV, Alexander, 76101 Ness Ziona (IL); SALANT, Asaf, 76101 Ness Ziona (IL); BEERI, Roy, 76101 Ness Ziona (IL)
(74) Representative: Liesegang, Eva
(86) International application number: PCT/EP2016/070444
(87) International publication number: WO 2018/041344

(56) References cited:
- WO-A-85/04849
- DE-U- 1 802 886
- JP-A- S5 766 923
- US-A- 4 682 976
- US-A- 5 076 040
- US-A1- 2002 170 272
- US-A1- 2012 005 993

## Description

### BACKGROUND

A flexible package, such as a package made from a thermoplastic film, can be produced in a process where the film is printed, a package or pouch is produced from the film by shaping the film and overlapping film layers, the package is filled and sealed by crimping using jaws. The jaws can generate a seal applying heat and pressure to a seal region of the package. When the sealing area is printed, even if there is a protective varnish coating or lamination, the geometry of the jaws can cause defects in the printed image areas.
A sealing tool according to the preamble of claim 1 is known from US 5,076,040. A similar sealing tool is described in US 2012/0005993 A1. Further sealing tools are disclosed in JPS 57066923 A; DE 1802886 U; US 2002/170272 A1; US 4, 682 976; and WO 85/04849 A. The present invention relates to sealing tool according to claim 1, a package according to claim 12, and a method according to claim 14. Embodiments are defined in the dependent claims.

### DESCRIPTION OF DRAWINGS

Some examples will be described with reference to the drawings.
Fig. 1 shows a schematic diagram of a system for producing a package from a flexible packaging material according to one example;
Fig. 2 shows different types of flexible packages according to a number of examples;
Fig. 3 shows an enlarged view of a seal region of the package according to one example;
Fig. 4 shows a schematic diagram of a sealing tool according to one example;
Fig. 5 shows a graph for illustrating a profile of a sealing tool according to one example;
Fig. 6 shows a flow diagram of a manufacturing process according to one example.

### DESCRIPTION OF EXAMPLES

Different types of consumer goods, such as food products, pharmaceuticals, cosmetics, toys, just to name a few examples, are packaged using thin films or sheets of flexible packaging material, with images such as corporate branding, or product information printed onto the film. The flexible packaging material serves to protect the product from, for example, moisture, oxidation or pathogens, while also providing information to the user regarding the nature and origin of the product contained therein.

Liquid electrophotographic printing (LEP), or electrostatic printing, is one method by which images or information can be printed onto substrates such as paper or plastic. The LEP printing process involves creating an image on a photoconductive surface, applying an ink having charged particles to the photoconductive surface, such that they selectively bind to the image, and then transferring the charged particles in the form of the image to a print substrate.

As used herein, "electrostatic printing" or "electrophotographic printing" generally refers to a process that provides an image that is transferred from a photo imaging substrate either directly or indirectly via an intermediate transfer member to a print substrate. As such, the image is not substantially absorbed into the photo imaging substrate on which it is applied. Additionally, "electrophotographic printers" or "electrostatic printers" generally refer to those printers capable of performing electrophotographic printing or electrostatic printing, as described above. "Liquid electrophotographic printing" is a specific type of electrophotographic printing where a liquid composition is employed in the electrophotographic process rather than a powder toner.

The flexible substrate, to which the liquid electrophotographic ink composition is to be printed (and thus is also referred to herein as the print substrate) may be any material suitable for use in a liquid electrophotographic printing process and suitable for use in a flexible packaging material. The flexible substrate may form the outermost layer of a laminated flexible packaging material or it may form the entire packaging material. The flexible substrate may be transparent, semitransparent or opaque.

In one example, the flexible substrate comprises a film of a polymer, for example a thermoplastic polymer. For example, the flexible packaging material is formed from a PET/PE pre-laminate or from a PET/AI/PE pre-laminate. In another example, the flexible substrate comprises a film of biaxially oriented polypropylene (BOPP), polypropylene (PP), or polyethylene terephthalate (PET). Other suitable polymers will be known in the art and the examples provided above should be seen as non-limiting examples. The flexible substrate may comprise a single-layer or multiple-layer film having a thickness in the range of about 5 µm to about 150 µm, or from about 10 µm to about 20 µm, or of about 12 µm, for example.

The liquid electrophotographic printing (LEP) composition useful for printing on the flexible packaging materials may comprise a colorant or pigment, a polymer resin and a carrier fluid or liquid. The LEP composition may further comprise additives such as charge directors, charge adjuvants, surfactants, viscosity modifiers, emulsifiers and the like. In some examples, the LEP composition may not contain any pigment, or comprise substantially zero pigment and thus be a pigment-free composition, useful in providing a particular transparent gloss or sheen to a printed substrate. The printed packaging material may comprise a primer layer to promote adhesion between the LEP composition and the packaging material, and an overprint varnish covering and protecting the LEP composition. Overprint varnish (OPV) may be applied on surface printed image to protect the LEP printing against chemical and mechanical damage, heat, UV radiation and the like. Another way to protect printed image can be done by lamination, using adhesive and secondary substrate.

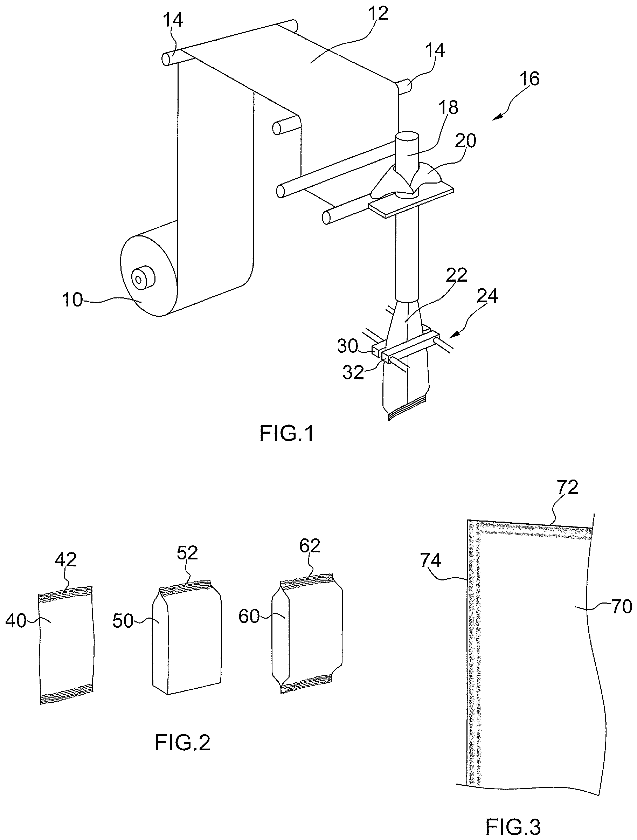

Fig. 1 shows an example of a system for producing a package from a flexible packaging material. The system comprises a roll of packaging material 10 which, in this example, may be a thermoplastic film substrate having a surface printed by LEP with an overprint varnish (OPV) coating. The packaging material 10 can be transported as a film web 12, via a number of rollers 14, to a forming station 16. In the example of fig. 1, forming station 16 comprises a forming tube 18 and a forming shoulder 20 but other types of forming devices can be used. The forming station reshapes the film web 12 to have a tubular shape which is closed along a longitudinal seam 22, produced downstream of the forming station, at seam forming unit 26. This "endless" tube of the thermoplastic film is fed to a sealing station 24 where a bottom seam can be generated by sealing jaws 30, 32. This will become the bottom of a new package or pouch. Then a product (not shown) is dispensed into the package and the top of the package can be sealed by a top seal using the same pair of sealing jaws 30, 32 or another pair of sealing jaws. The package is sealed in the region of the seams by application of heat and pressure via the sealing jaws 30, 32. The sealing medium is provided by the material of the thermoplastic film which is at least partially melted during the sealing process. In one example, a pre-laminated structure is used, such as PET/A1/PE, and the PE film is melted as the sealing medium. As soon as the sealing medium has cooled off and cured, the seal is completed. The sealing process may take less than a second.

In one example, the sealing station 24 may comprise two pairs of sealing jaws, a lower pair for forming the top seal of a package that has just been filled; and an upper pair, closer to the forming station 16, for forming the bottom seam of the next package. A cutting device, e.g. a blade, may be provided between the two pairs of sealing jaws to cut and separate subsequent packages.

Whereas a vertical system design is shown in fig. 1, this is just an example and different system configurations can be contemplated. For example, forming of the package, filling and sealing the package can be performed in an in-line process at a single location or station or it can be distributed across different locations or stations. Whereas fig. 1 shows an in-line system performing all of the steps of forming, filling and sealing, other systems can provide a pre-form of the package which is shipped to a customer where the package is filled with a product and sealed.

Fig. 2 shows a number of different package designs according to various examples. One package 40 has a pillow design, including a top seal 42 and a bottom seal 44 which may be formed by a pair of sealing jaws as described with regard to fig. 1, for example. Another package 50 has a so-called block bottom design including a top seam 52 which may be formed by a pair of sealing jaws. The package has a flat bottom and can stand up. Another package 60 has a so-called gusseted design, including a top seal 62 and a bottom seal 64, which is a variation of the pillow design. Packages 50 and 60 have side folds to provide for additional volume. Each of the seals can be formed by a pair of sealing jaws including grooves and ridges which extend along the length of the seam to generate a "wavy" sealing structure.

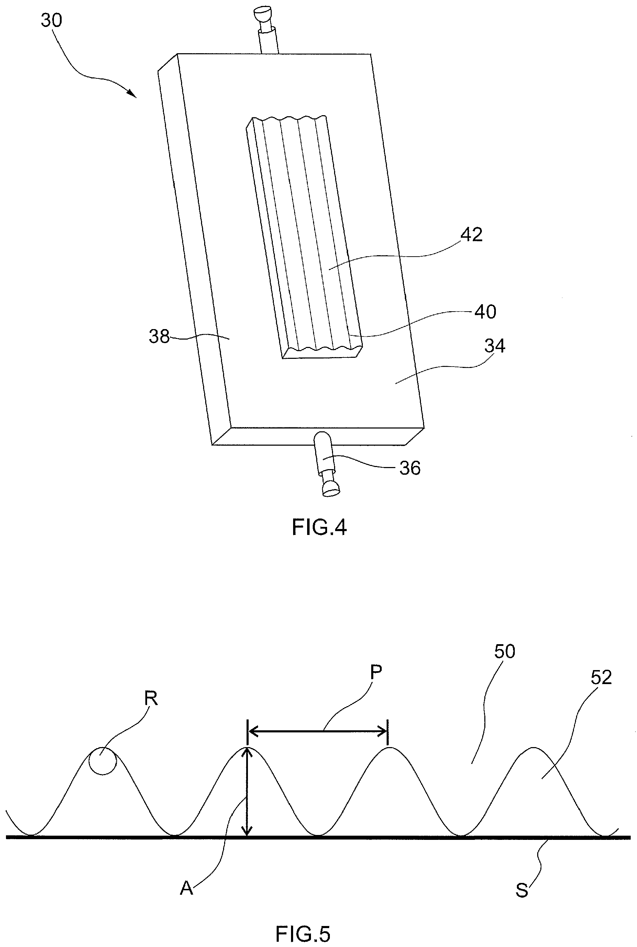

An enlarged view of a seal portion of a package 18 is shown in fig. 3. Package 70 comprises top seal regions 72 and side seal regions 74. Each of the seal regions 72, 74, in the example of fig. 3, comprises three ridges and three grooves which are shaped according to a sinusoidal of or approximately sinusoidal wave. The grooves each have rounded bottom portions and the ridges have rounded top portions. The shape of the wavy seal regions in explained in further detail with respect to fig. 4, showing an example of a sealing jaw for producing the seal region.

Fig. 4 shows an example of a sealing jaw 30 which is part of the sealing tool for producing a sealed seam of the package. The sealing jaw 30 comprises an elongate tool plate 34 having a length extending in the direction of the seal to be formed. Support studs 36 are provided at shorter side faces of the plate for mounting the jaw in a sealing tool. The tool plate 34 features a flat surface portion 38 and a wavy profile, including alternating grooves 40 and ridges 42. In the example of fig. 4, four grooves and four ridges are provided on the tool plate 34surface. Other numbers of grooves and ridges can be provided, such as two grooves and two ridges, or three grooves and three ridges, or three grooves and four ridges, or four grooves and three ridges etc. In one example, the wavy profile of the tool plate 34 comprises from one to six grooves and from one to six ridges, or from two to four grooves and from two to four ridges. The tool plate 34 can be made from stainless steel iron or another matter which provides a substrate for forming the wavy profile. Teflon coating on the jaws can be applied to avoid stickiness to the sealing surface.

In one example, the grooves have a curved cross-section in a bottom region thereof, and the ridges have a curved cross-section in a top region thereof. The curved cross-section of the grooves and the curved cross-section of the ridges may have the same or approximately the same radius of curvature. The curved cross-section of the grooves and the curved cross-section of the ridges may have a radius of curvature of about 0.5 to 2 mm.

The sealing jaw 30 shown in fig. 3 may be used in combination with a further mating sealing jaw (not shown) wherein the pair of sealing jaws are part of a sealing tool. Each sealing jaw 30 comprises a surface having a wavy profile, wherein the sealing jaws of one pair have complementary profiles, including grooves and ridges which, when the two jaws are brought together, engage with each other. In this and other examples, a depth of the grooves of one sealing jaw may correspond to a height of the ridges of the mating sealing jaw; and a pitch of the grooves of one sealing jaw may correspond to a pitch of the ridges of a mating with heating jaw. In this and other examples, the pitch may be in the range of about 1 to 3 mm. In this and other examples, a depth of the grooves of one sealing jaw may correspond to a height of the ridges of a mating sealing jaw wherein the depth and the height are in the range of about 0.3 to 0.8 mm. In this and other examples, the ratio between the depth of the grooves and a pitch of the grooves may be in the range of about 1:10 to 1:3.

In this and other examples, the radius of curvature of the grooves at the bottom portion of the grooves and the radius of curvature of the ridges at the top of the ridges may be about 1.5 to 2.5 of the depth of the grooves or about 1/10 to 3/4 of the pitch of the grooves. In this and other examples, the grooves and the ridges may form a sinusoidal or approximately sinusoidal profile on the respective jaw surfaces.

The sealing jaw 30 shown in fig. 4 is used in combination with a corresponding meeting sealing jaw having a wavy profile which complements the profile of the sealing jaw 30 wherein the pair of sealing jaws is part of a sealing station or sealing tool. The sealing tool further comprises a heating device coupled with one or both of the sealing jaws. The heating device may be integrated at least partially into one or both of the sealing jaws. The sealing tool, which in fig. 1 is schematically shown at 24, further comprises a mechanism for moving the sealing jaws towards each other and apart. For forming the seal, the sealing jaws, either one or both, are heated and moved towards each other, with part of the packaging material placed in the nip between the pair of sealing jaws. Accordingly, when closing the sealing jaws over the packaging material, the sealing jaws apply pressure and heat to the packaging material so as to at least partially melt the material and seal the packaging material in a seal region. As a result, a wavy sealed seam region is generated, an example of which is shown in fig. 3.

The wavy profile of the sealing jaws avoids grooves and ridges having sharp edges and hence avoids damaging the printed packaging material during sealing. For example, packaging material which is printed by LEP technology, even if an over print varnish is provided, is vulnerable to heat sealing using grooved jaws having sharp edges because the LEP chemistry is sensitive to high temperatures and the grooved jaws' sharp geometry, along with the pressure applied. Mechanical movement of ink and over print varnish can be generated which may be visible on the final package. To avoid any optical defects in printed images and color patches caused by the sealing jaws, the wavy profile of the sealing jaws may be used, an example of which is shown in fig. 4. Due to the rounded contour of the grooves and ridges, damaging any printed images and/or over printed varnish can be avoided or at least reduced to a degree that it is no longer perceivable. Performance tests have shown that the sealing jaws having the wavy profile can achieve very good and reliable sealing results.

In one example, a packaging material including a PET/PE pre-laminate was surface printed using LEP technology and an over print varnish. A package was produced by overlapping two layers of the packaging material and sealing the packaging material in a sealing area, using sealing jaws such as those shown in fig. 4. In a comparative example a similar seal region has been produced using sealing jaws having sharp edges at the bottom of the grooves and the top of the ridges. The surface printed packaging material was sealed at an elevated temperature of about 180°C, applying a pressure of about 450,000 Pa, for a time of about 1 sec, in both the example and the comparative example. Depending on the composition and the thickness of the packaging material, different temperature ranges and different pressure ranges can be selected, including temperatures in the range of 150 to 200°C and pressures in the range of 200,000 to 600,000 Pa (2-6 bar).

To verify the sealing quality, a package according to the example and a package according to the comparative example underwent a number of tests to compare the performance, e.g. having regard to sealing bond strength at elevated temperatures, drop test, leak test, and pasteurization. For example, in a drop test, the package was filled with 200 ml water, sealed and dropped from a height of 1.8 m. The package then was visually inspected for leaks in the sealing area wherein no defects could be observed. In another test, packages filled with water underwent a pasteurization process at 95°C for one hour. Again, no degradation of the sealed seam region could be observed after the pasteurization process. The tests revealed that the bond strength of the example was at least as good as or even better than the bond strength of the comparative example. Further, using the sealing jaws having the wavy profile, e.g. as shown in fig. 4, the printing on the packaging material was not damaged in the sealing area; whereas, in the comparative example, image defects could be observed where the sharp edges of the sealing jaws displaced the ink distorting the printed image or even scraped or scratched off part of the printing. Using wavy jaws avoids mechanical ink movement and yields higher-quality output after sealing is made.

Fig. 5 shows a schematic diagram for illustrating an example of a wavy profile of the sealing jaws. In the example of fig. 5, the profile has a sinusoidal or approximately sinusoidal cross-section. Assuming that line S represents the flat surface portion 38 of the tool plate 34 of the sealing jaw, the wavy profile illustrated in fig. 5 comprises grooves 50 and ridges 52. In the example fig. 5, an amplitude A correspondence to a depth of a groove; a pitch P illustrates a distance between two neighboring ridge tops; and a radius R represents a parameter of the curvature at the ridge top. In the example fig. 5, the depth of a groove has the same amplitude as the height of a ridge; the pitch of neighboring ridges is the same as the pitch of neighboring grooves; and the radius of curvature at the ridge top is the same as the radius of curvature at the groove bottom. Some examples of the parameters amplitude A, pitch P, and radius R are: 0.3 mm < A < 0.8 mm; 1 mm < P < 3 mm; and 0.5 mm < R < 2 mm. The absolute values, among others, will depend on the size and nature of the package to be sealed. Also the number of grooves and ridges will depend on the size and nature of the package and on the intended bonding strength.

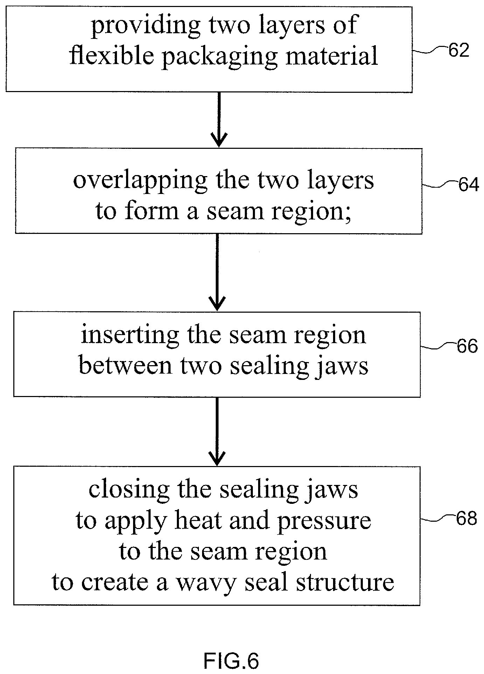

Fig. 6 shows a flow diagram of one example of a process of producing a package from a flexible packaging material. The process starts in block 62 by providing two layers of the flexible packaging material. In block 64 the two layers are overlapped to form a seal region. In block 66 the seal region of the two layers is inserted between two sealing jaws, including a first jaw having a first jaw surface and a second jaw having a second jaw surface wherein the respective jaw surfaces arranged opposite to each other. The first jaw surface includes a plurality of grooves and the second jaw surface includes a plurality of ridges, the grooves and ridges extending along the length of the seal region. The respective grooves and ridges can be provided in a wavy surface profile, such as the one shown in fig. 4. In block 68, the two sealing jaws are moved towards each other to close the jaws, so as to engage the grooves and ridges of the respective opposite jaw surfaces, with the packaging material they between, and to apply heat and pressure to the seal region of the packaging material to create a wavy seal structure in the seal region. The wavy seal structure includes grooves and ridges corresponding to the grooves and ridges of the jaw surfaces, wherein the grooves and ridges in their bottom and top regions have curved cross-sections.

## Claims

1. A sealing tool for sealing a flexible packaging material (10), the sealing tool comprising
a first jaw (30) including a first jaw surface (38) and a second jaw (32) including a second jaw surface with the respective jaw surfaces arranged opposite to each other,
wherein the first jaw surface (38) includes a groove (40; 50) and the second jaw surface includes a ridge (42, 52) and wherein the groove on the first jaw surface and the ridge on the second jaw surface are designed to mate with each other when the jaw surfaces are moved towards each other, and
wherein the groove (40; 50) on the first jaw surface has a groove bottom featuring a curved cross-section and the ridge (42, 52) has a ridge top featuring a curved cross-section;
**characterized in that** the curved cross-section of the groove and the curved cross-section of the ridge have a radius of curvature of at least 0.5 mm.

2. The sealing tool of claim 1 wherein the curved cross-section of the groove (40; 50) and the curved cross-section of the ridge (42, 52) have the same or about the same radius of curvature.

3. The sealing tool of claim 2, wherein the curved cross-section of the groove (40; 50) and the curved cross-section of the ridge (42, 52) have a radius of curvature of at least 0.5 mm to about 2 mm.

4. The sealing tool of claim 2, wherein the first jaw surface includes a plurality of grooves (40; 50) and the second jaw surface includes a corresponding plurality of ridges (42, 52),
wherein a depth of the grooves (40; 50) corresponds to a height of the ridges (42, 52); and
wherein a pitch of the grooves (40; 50) corresponds to a pitch of the ridges (42, 52).

5. The sealing tool of claim 4, wherein the ratio between the depth of the grooves (40; 50) and a pitch of the grooves is in the range of about 1:10 to 1:3.

6. The sealing tool of claim 4, wherein the radius of curvature of the grooves (40; 50) and the radius of curvature of the ridges (42, 52) is about 1.5 to 2.5 of the depth of the grooves or about 1/10 to 3/4 of the pitch of the grooves.

7. The sealing tool of claim 1, wherein the first jaw surface includes a plurality of grooves (40; 50) and the second jaw surface includes a corresponding plurality of ridges (42, 52); and
wherein a pitch of the grooves (40; 50) corresponds to a pitch of the ridges (42, 52) wherein the pitch is in the range of about 1 to 3 mm.

8. The sealing tool of claim 4, wherein a depth of the grooves (40; 50) corresponds to a height of the ridges (42, 52) wherein the depth and the height are in the range of about 0.3 to 0.8 mm.

9. The sealing tool of claim 1, wherein the first jaw surface includes a plurality of grooves (40; 50) and the second jaw surface includes a corresponding plurality of ridges (42, 52), wherein the grooves (40; 50) and the ridges (42, 52) form a sinusoidal or approximately sinusoidal profile on the respective jaw surfaces.

10. The sealing tool of claim 4, wherein the first jaw surface includes 2 to 8 grooves (40; 50) and the second jaw surface includes 2 to 8 ridges (42, 52).

11. The sealing tool of claim 1, further including a heating device coupled with one or both of the first jaw (30) and the second jaw (32).

12. A package including a flexible packaging material (10) having electrophotographically printed images or information thereon,
wherein two layers of the flexible packaging material (10) are joined to form a sealed seam along an edge of the package, the seam being sealed by a wavy sealing structure including a groove (40; 50) and an adjacent ridge (42, 52), the groove having a groove bottom featuring a curved cross-section and the ridge having a ridge top featuring a curved cross-section,
wherein the curved cross-section of the groove (40; 50) and the curved cross-section of the ridge (42; 52) have a radius of curvature of at least 0.5 mm.

13. The package of claim 12, wherein the flexible packaging material (10) comprises a PET-based laminate having a liquid electrophotographic composition and an overprint varnish printed thereon.

14. A method of producing a package from a flexible packaging material (10), the method comprising:
providing two layers of the flexible packaging material (10) and overlapping the two layers to form a seal region (52; 62; 70, 72);
inserting the seal region of the two layers between two sealing jaws (30, 32), including a first jaw having a first jaw surface and a second jaw having a second jaw surface with the respective jaw surfaces arranged opposite to each other, wherein the first jaw surface includes a plurality of grooves (40; 50) and the second jaw surface includes a plurality of ridges (42, 52), the grooves and ridges (42, 52) extending along the length of the seal region;
moving the two sealing jaws (30, 32) towards each other and using the sealing jaws (30, 32) to apply heat and pressure to the seal region to create a wavy seal structure in the seal region including grooves and ridges corresponding to the grooves (40; 50) and ridges (42, 52) of the jaw surfaces, wherein the grooves and ridges are formed with respective bottom and top regions, the bottom and top regions having a curved cross-section having a radius of curvature **characterized in that** the radius of curvature is of at least 0.5 mm.

15. The method of claim 14, wherein the radius of curvature is at least 0.5 mm to about 2 mm.

## Patentansprüche

1. Siegelwerkzeug zum Versiegeln eines flexiblen Verpackungsmaterials (10), wobei das Siegelwerkzeug Folgendes umfasst:
eine erste Backe (30) mit einer ersten Backenfläche (38) und eine zweite Backe (32) mit einer zweiten Backenfläche, wobei die jeweiligen Backenflächen einander gegenüberliegend angeordnet sind,
wobei die erste Backenfläche (38) eine Nut (40; 50) enthält und die zweite Backenfläche einen Grat (42, 52) enthält und wobei die Nut an der ersten Backenfläche und der Grat an der zweiten Backenfläche so ausgelegt sind, dass sie ineinanderpassen, wenn die Backenflächen aufeinander zu bewegt werden, und
wobei die Nut (40; 50) an der ersten Backenfläche einen Nutboden mit einem gekrümmten Querschnitt aufweist und der Grat (42, 52) eine Gratdecke mit einem gekrümmten Querschnitt aufweist;
**dadurch gekennzeichnet, dass** der gekrümmte Querschnitt der Nut und der gekrümmte Querschnitt des Grats einen Krümmungsradius von mindestens 0,5 mm aufweisen.

2. Siegelwerkzeug nach Anspruch 1, wobei der gekrümmte Querschnitt der Nut (40; 50) und der gekrümmte Querschnitt des Grats (42, 52) den gleichen oder etwa den gleichen Krümmungsradius aufweisen.

3. Siegelwerkzeug nach Anspruch 2, wobei der gekrümmte Querschnitt der Nut (40; 50) und der gekrümmte Querschnitt des Grates (42, 52) einen Krümmungsradius von mindestens 0,5 mm bis etwa 2 mm aufweisen.

4. Siegelwerkzeug nach Anspruch 2, wobei die erste Backenfläche eine Vielzahl von Nuten (40; 50) und die zweite Backenfläche eine entsprechende Vielzahl von Graten (42, 52) enthält,
wobei eine Tiefe der Nuten (40; 50) einer Höhe der Grate (42, 52) entspricht; und
wobei ein Abstand der Nuten (40; 50) einem Abstand der Grate (42, 52) entspricht.

5. Siegelwerkzeug nach Anspruch 4, wobei das Verhältnis zwischen der Tiefe der Nuten (40; 50) und einem Abstand der Nuten im Bereich von etwa 1:10 bis 1:3 liegt.

6. Siegelwerkzeug nach Anspruch 4, wobei der Krümmungsradius der Nuten (40; 50) und der Krümmungsradius der Grate (42, 52) etwa 1,5 bis 2,5 der Tiefe der Nuten oder etwa 1/10 bis 3/4 des Abstands der Nuten beträgt.

7. Siegelwerkzeug nach Anspruch 1, wobei die erste Backenfläche eine Vielzahl von Nuten (40; 50) enthält und die zweite Backenfläche eine entsprechende Vielzahl von Graten (42, 52) enthält; und
wobei ein Abstand der Nuten (40; 50) einem Abstand der Grate (42, 52) entspricht, wobei der Abstand im Bereich von etwa 1 bis 3 mm liegt.

8. Siegelwerkzeug nach Anspruch 4, wobei eine Tiefe der Nuten (40; 50) einer Höhe der Grate (42, 52) entspricht, wobei die Tiefe und die Höhe im Bereich von etwa 0,3 bis 0,8 mm liegen.

9. Siegelwerkzeug nach Anspruch 1, wobei die erste Backenfläche eine Vielzahl von Nuten (40; 50) und die zweite Backenfläche eine entsprechende Vielzahl von Graten (42, 52) enthält, wobei die Nuten (40; 50) und die Grate (42, 52) ein sinusförmiges oder annähernd sinusförmiges Profil auf den jeweiligen Backenflächen bilden.

10. Siegelwerkzeug nach Anspruch 4, wobei die erste Backenfläche 2 bis 8 Nuten (40; 50) und die zweite Backenfläche 2 bis 8 Grate (42, 52) enthält.

11. Siegelwerkzeug nach Anspruch 1, das ferner eine Heizvorrichtung enthält, die mit einer oder beiden der ersten Backe (30) und der zweiten Backe (32) gekoppelt ist.

12. Verpackung, die einen flexibles Verpackungsmaterial (10) enthält, das elektrofotografisch gedruckte Bilder oder Informationen darauf aufweist,
wobei zwei Schichten des flexiblen Verpackungsmaterials (10) verbunden sind, um eine Siegelnaht entlang einer Kante der Verpackung zu bilden, wobei die Naht durch eine wellenförmige Siegelstruktur mit einer Nut (40; 50) und einem benachbarten Grat (42, 52) versiegelt ist, wobei die Nut einen Nutboden mit gekrümmtem Querschnitt und der Grat eine Gratdecke mit gekrümmtem Querschnitt aufweist,
wobei der gekrümmte Querschnitt der Nut (40; 50) und der gekrümmte Querschnitt des Grats (42; 52) einen Krümmungsradius von mindestens 0,5 mm aufweisen.

13. Verpackung nach Anspruch 12, wobei das flexible Verpackungsmaterial (10) ein PETbasiertes Laminat umfasst, das eine flüssige elektrofotografische Zusammensetzung und einen darauf aufgedruckten Überdrucklack aufweist.

14. Verfahren zum Herstellen einer Verpackung aus einem flexiblen Verpackungsmaterial (10), wobei das Verfahren Folgendes umfasst:
Bereitstellen von zwei Schichten des flexiblen Verpackungsmaterials (10) und Überlappen der zwei Schichten, um einen Siegelbereich (52; 62; 70, 72) zu bilden;
Einsetzen des Siegelbereichs der beiden Schichten zwischen zwei Siegelbacken (30, 32), die eine erste Backe mit einer ersten Backenfläche und eine zweite Backe mit einer zweiten Backenfläche enthalten, wobei die jeweiligen Backenflächen einander gegenüberliegend angeordnet sind, wobei die erste Backenfläche eine Vielzahl von Nuten (40; 50) enthält und die zweite Backenfläche eine Vielzahl von Graten (42, 52) enthält, wobei sich die Nuten und Grate (42, 52) entlang der Länge des Siegelbereichs erstrecken; Bewegen der beiden Siegelbacken (30, 32) aufeinander zu und Verwenden der Siegelbacken (30, 32), um Wärme und Druck auf den Siegelbereich auszuüben, um eine wellenförmige Siegelstruktur im Siegelbereich zu erzeugen, einschließlich Nuten und Graten entsprechend den Nuten (40; 50) und Graten (42, 52) der Backenflächen, wobei die Nuten und Grate mit jeweiligen Boden- und Deckenbereichen ausgebildet sind, wobei die Boden- und Deckenbereiche einen gekrümmten Querschnitt mit einem Krümmungsradius aufweisen, der **dadurch gekennzeichnet ist, dass** der Krümmungsradius mindestens 0,5 mm beträgt.

15. Verfahren nach Anspruch 14, wobei der Krümmungsradius mindestens 0,5 mm bis etwa 2 mm beträgt.

## Revendications

1. Outil de scellage permettant de sceller un matériau d'emballage flexible (10), l'outil de scellage comprenant
une première mâchoire (30) comprenant une première surface de mâchoire (38) et une seconde mâchoire (32) comprenant une seconde surface de mâchoire, les surfaces de mâchoire respectives étant disposées l'une en face de l'autre,
dans lequel la première surface de mâchoire (38) comprend une rainure (40 ; 50) et la seconde surface de mâchoire comprend une arête (42, 52), la rainure sur la première surface de mâchoire et l'arête sur la seconde surface de mâchoire étant conçues pour s'accoupler lorsque les surfaces des mâchoires sont rapprochées, et
dans lequel la rainure (40 ; 50) sur la première surface de mâchoire comporte un fond de rainure présentant une section transversale incurvée et l'arête (42, 52) comporte un sommet d'arête présentant une section transversale incurvée ;
**caractérisé en ce que** la section transversale incurvée de la rainure et la section transversale incurvée de l'arête ont un rayon de courbure d'au moins 0,5 mm.

2. Outil de scellage selon la revendication 1, dans lequel la section transversale incurvée de la rainure (40 ; 50) et la section transversale incurvée de l'arête (42, 52) ont le même ou à peu près le même rayon de courbure.

3. Outil de scellage selon la revendication 2, dans lequel la section transversale incurvée de la rainure (40 ; 50) et la section transversale incurvée de l'arête (42, 52) ont un rayon de courbure d'au moins 0,5 à environ 2 mm.

4. Outil de scellage selon la revendication 2, dans lequel la première surface de mâchoire comprend une pluralité de rainures (40 ; 50) et la seconde surface de mâchoire comprend une pluralité correspondante d'arêtes (42, 52),
dans lequel une profondeur des rainures (40 ; 50) correspond à une hauteur des arêtes (42, 52) ; et
dans lequel un pas des rainures (40 ; 50) correspond à un pas des arêtes (42, 52).

5. Outil de scellage selon la revendication 4, dans lequel le rapport entre la profondeur des rainures (40 ; 50) et un pas des rainures est compris entre environ 1:10 et 1:3.

6. Outil de scellage selon la revendication 4, dans lequel le rayon de courbure des rainures (40 ; 50) et le rayon de courbure des arêtes (42, 52) est d'environ 1,5 à 2,5 de la profondeur des rainures ou environ 1/10 à 3/4 du pas des rainures.

7. Outil de scellage selon la revendication 1, dans lequel la première surface de mâchoire comprend une pluralité de rainures (40 ; 50) et la seconde surface de mâchoire comprend une pluralité correspondante d'arêtes (42, 52) ; et
dans lequel un pas des rainures (40 ; 50) correspond à un pas des arêtes (42, 52), le pas étant compris entre environ 1 et 3 mm.

8. Outil de scellage selon la revendication 4, dans lequel une profondeur des rainures (40 ; 50) correspond à une hauteur des arêtes (42, 52), la profondeur et la hauteur étant comprises entre environ 0,3 et 0,8 mm.

9. Outil de scellage selon la revendication 1, dans lequel la première surface de mâchoire comprend une pluralité de rainures (40 ; 50) et la seconde surface de mâchoire comprend une pluralité correspondante d'arêtes (42, 52), les rainures (40 ; 50) et les arêtes (42, 52) formant un profil sinusoïdal ou approximativement sinusoïdal sur les surfaces de mâchoire respectives.

10. Outil de scellage selon la revendication 4, dans lequel la première surface de mâchoire comprend 2 à 8 rainures (40 ; 50) et la seconde surface de mâchoire comprend 2 à 8 arêtes (42, 52).

11. Outil de scellage selon la revendication 1, comprenant en outre un dispositif de chauffage couplé à la première mâchoire (30) et/ou à la seconde mâchoire (32).

12. Emballage comprenant un matériau d'emballage flexible (10) présentant des informations ou des images imprimées par électrophotographie,
dans lequel deux couches du matériau d'emballage flexible (10) sont jointes pour former une couture scellée le long d'un bord de l'emballage, la couture étant scellée par une structure de scellage ondulée comprenant une rainure (40 ; 50) et une arête (42, 52) adjacente, la rainure ayant un fond de rainure présentant une section transversale incurvée et l'arête ayant un sommet d'arête présentant une section transversale incurvée, dans lequel la section transversale incurvée de la rainure (40 ; 50) et la section transversale incurvée de l'arête (42, 52) ont un rayon de courbure d'au moins 0,5 mm.

13. Emballage selon la revendication 12, dans lequel le matériau d'emballage flexible (10) comprend un produit stratifié à base de PET ayant une composition électrophotographique liquide et un vernis de surimpression imprimé dessus.

14. Procédé de fabrication d'un emballage à partir d'un matériau d'emballage flexible (10), le procédé consistant à :
fournir deux couches du matériau d'emballage flexible (10) et à les chevaucher pour former une région de scellage (52 ; 62 ; 70, 72) ;
insérer la région de scellage des deux couches entre deux mâchoires de scellage (30, 32), notamment une première mâchoire ayant une première surface de mâchoire et une seconde mâchoire ayant une seconde surface de mâchoire, les surfaces de mâchoire respectives étant disposées l'une en face de l'autre, la première la surface de la mâchoire comprenant une pluralité de rainures (40 ; 50) et la seconde surface de la mâchoire comprenant une pluralité d'arêtes (42, 52), les rainures et les arêtes (42, 52) s'étendant le long de la région de scellage ;
déplacer les deux mâchoires de scellage (30, 32) l'une vers l'autre, et à se servir des mâchoires de scellage (30, 32) pour appliquer de la chaleur et de la pression à la région de scellage de façon à créer une structure de scellage ondulée dans la région de scellage comprenant des rainures et des arêtes correspondant aux rainures (40 ; 50) et aux arêtes (42, 52) des surfaces de mâchoire, les rainures et les arêtes étant formées avec des régions inférieure et supérieure respectives, les régions inférieure et supérieure présentant une section transversale incurvée ayant un rayon de courbure **caractérisé en ce qu'**il est d'au moins 0,5 mm.

15. Procédé selon la revendication 14, dans lequel le rayon de courbure est d'au moins 0,5 à environ 2 mm.
